Europäisches Patentamt

European Patent Office

Office européen des brevets

(19)

(11) Numéro de publication: **0 387 152**
**A1**

(12) ## DEMANDE DE BREVET EUROPEEN

(21) Numéro de dépôt: 90400625.1

(22) Date de dépôt: 08.03.90

(51) Int. Cl.⁵: **B65B 21/02, B65G 47/91, B65G 61/00**

(30) Priorité: **10.03.89 FR 8903162**

(43) Date de publication de la demande:
**12.09.90 Bulletin 90/37**

(84) Etats contractants désignés:
**AT BE CH DE DK ES GB GR IT LI LU NL SE**

(71) Demandeur: **G. M. THIERION S.A.**
**Zone Industrielle**
**F-51140 Muizon(FR)**

(72) Inventeur: **Thierion, Michel**
**Zone Industrielle**
**F-51140 Muizon(FR)**

(74) Mandataire: **Robert, Jean-Pierre et al**
**CABINET BOETTCHER 23, rue la Boétie**
**F-75008 Paris(FR)**

(54) **Dispositif de manutention de bouteilles.**

(57) Un dispositif de manutention de bouteilles comprend un outil de préhension (5) latérale de bouteilles, articulé à une extrémité d'un lien souple (17) ayant son autre extrémité attelée à des moyens d'équilibrage de l'outil de préhension développant un effort d'équilibrage ajustable à deux valeurs selon que l'outil est à vide ou en charge. Ce dispositif de manutention comprend en outre une table de support (1a) pour une pluralité de bouteilles disposées debout en file et un dosseret (6) monté le long de la table pour accompagner le basculement des bouteilles lors de la modification de l'effort d'équilibrage.

*Fig. 1*

EP 0 387 152 A1

## Dispositif de manutention de bouteilles.

Pour constituer des lits de bouteilles couchées, lors de leur mise en caisse, ou pour décharger lit par lit ces caisses, il est connu d'utiliser un outil à commande manuelle de préhension de bouteilles permettant de saisir latéralement une série de bouteilles couchées ou debout pour les transporter et les faire pivoter. Cet outil est généralement suspendu à une potence pivotante par une sangle et est articulé à l'extrémité libre de cette sangle. Le niveau de cet outil est modifié en permanence par l'opérateur, la sangle entrant ou sortant à volonté de la potence. Un dispositif d'équilibrage de l'outil est prévu à l'autre extrémité de la sangle, par exemple dans le bâti de la potence.

L'un des problèmes à résoudre avec ce type d'outil est de pouvoir adapter l'équilibrage de l'outil selon qu'il est ou non en charge en prenant en compte le fait que la charge à équilibrer varie de manière rapide au moment de la prise en charge et de la dépose des bouteilles, et qu'en outre, dans la plupart des cas, il se produit un basculement de cette charge à ce moment précis.

Ces variations rapides d'état d'équilibre de l'outil et les mouvements qui en résultent engendrent dans les bras de l'opérateur d'une part des à-coups pénibles à supporter et, d'autre part, l'obligent à développer des efforts rapides de grande intensité pour maîtriser le mieux possible l'évolution de l'outil pendant ces périodes transitoires.

L'invention se propose d'intégrer dans un dispositif de manutention de bouteilles les moyens permettant une amélioration sensible du confort de l'opérateur, de la sécurité des opérations et des conditions d'utilisation.

A cet effet, elle a donc pour objet un dispositif de manutention de bouteilles comprenant un outil de préhension latérale de bouteilles, articulé à une extrémité d'un lien souple ayant son autre extrémité attelée à des moyens d'équilibrage de l'outil de préhension développant un effort d'équilibrage ajustable à deux valeurs selon que l'outil est à vide ou en charge, et une table de support pour une pluralité de bouteilles déposées debout en file, ce dispositif de manutention étant remarquable en ce qu'il comprend en outre un dosseret monté le long de la table pour accompagner le basculement des bouteilles lors de la modification de l'effort d'équilibrage.

D'autres caractéristiques et avantages de l'invention apparaîtront à la lecture de la description qui suit, d'un exemple de réalisation donné à titre d'illustration et sans intentions restrictives. On se reportera aux dessins annexés sur lesquels :

- la figure 1 est une vue en perspective du dispositif conforme à l'invention,

- la figure 2 représente de façon schématique le système d'équilibrage de ce dispositif, et

- les figures 3a,b,c sont trois vues de côté schématiques de l'outil en charge illustrant une étape de fonctionnement de ce dispositif.

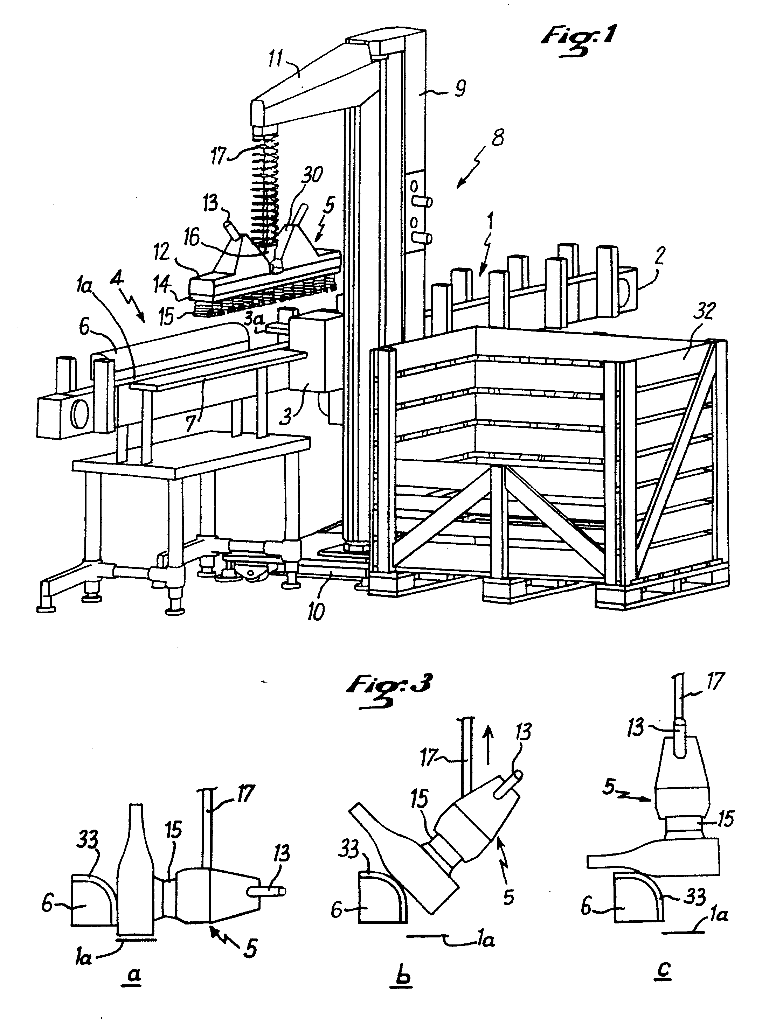

Le dispositif de manutention de bouteilles représenté sur la figure 1 comprend un convoyeur 1 destiné à être raccordé, par une de ses extrémités 2, en bout d'un convoyeur de bouteilles prévu, suivant les cas, pour acheminer des bouteilles vers le dispositif de manipulation ou en direction opposée. Le dispositif de manutention représenté est adapté au premier de ces cas et il est équipé d'un système de comptage 3 associé à une butée escamotable 3a de bouteilles prévu pour ne laisser accéder à une zone de chargement 4 de bouteilles qu'un nombre déterminé de bouteilles à la fois, correspondant à la capacité d'enlèvement d'un outil de préhension 5 qui sera décrit plus loin. Le système de comptage 3 et la butée 3a associée sont constitués, par exemple, par un mécanisme à étoile s'engrenant sur toutes les bouteilles successivement pour les compter et bloquer la progression des bouteilles provenant du convoyeur tant que les bouteilles présentes sur la zone de chargement 4 n'en sont pas enlevées. Au niveau de cette zone de chargement, un dosseret 6 en quart de rond et une tablette d'appui 7 de hauteur réglable, dont la fonction sera précisée plus loin, s'étendent en vis-à-vis de chaque côté d'un tronçon 1a du convoyeur.

Du côté du tronçon 1a du convoyeur 1 où s'étend la tablette d'appui 7, se dresse une potence creuse 8 ayant un montant 9 monté pivotant autour de son axe longitudinal sur un socle 10, et un bras 11 auquel est suspendu l'outil de préhension 5. La potence 8 est disposée auprès du tronçon 1a du convoyeur 1 de façon que, son bras 11 étant sensi blement parallèle au tronçon 1a du convoyeur 1, l'outil de préhension 5 soit en regard de la zone de chargement 4 (position illustrée sur la figure 1) et puisse être, en particulier, posé sur la tablette d'appui 7 qui est prévue à cet effet.

L'outil de préhension 5 comprend un bâti 12 allongé, muni de deux poignées 13 pour sa manipulation par l'utilisateur, sur lequel est monté une rampe 14 de ventouses 15, reliée à un générateur de vide. Ce générateur crée une dépression au niveau de chaque ventouse 15 permettant d'assujettir par succion à l'outil 5 autant de bouteilles que la rampe 14 comporte de ventouses. Entre les poignées 13, à égale distance de ses extrémités, le bâti 12 comprend un organe d'attache 16 pour une extrémité d'une sangle 17 de suspension, prévu pour permettre un pivotement de 90° de l'outil de préhension 5 autour de son axe longitudinal. La face active des ventouses 15 est destinée à être portée au contact de la surface latérale cylindrique des bouteilles à manipuler.

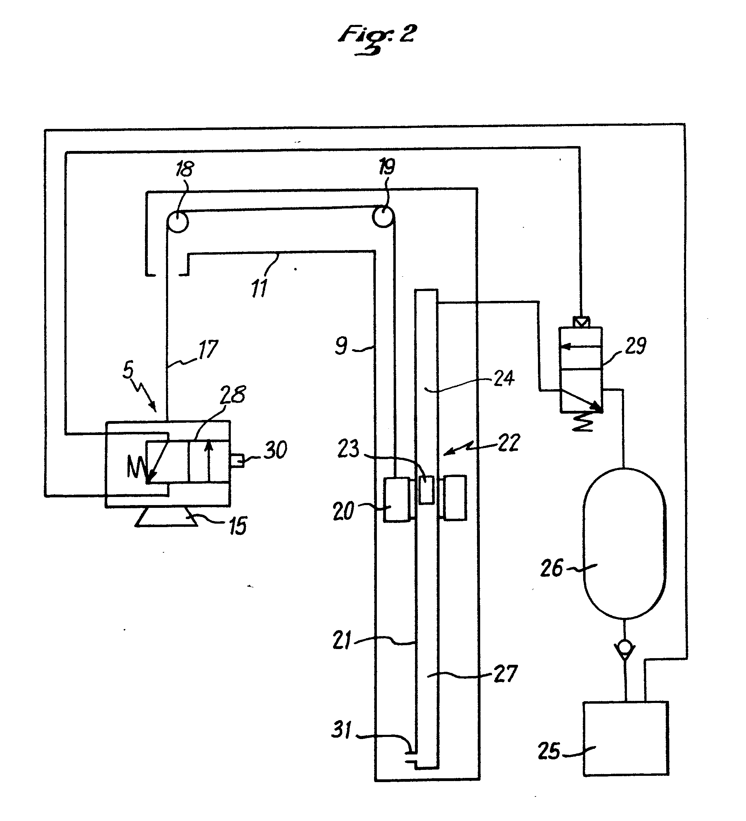

Comme on peut le voir sur la figure 2, la sangle 17 passe à l'intérieur de la potence 9 sur deux poulies de renvoi 18,19 et elle est attelée, à son autre extrémité, à un contrepoids 20 qui équilibre l'outil de préhension 5 quand il est à vide. Le contrepoids 20 est guidé à coulissement sur le corps tubulaire 21 amagnétique, sensiblement vertical, d'un vérin pneumatique sans tige 22, au piston 23 duquel il est couplé magnétiquement. Ce vérin joue le rôle d'un ressort à gaz lorsqu'il est alimenté. La chambre supérieure 24 du vérin est connectée à une source 25 de gaz comprimé par l'intermédiaire d'une capacité tampon 26 ayant un volume important par rapport au volume de la chambre 24, afin que la pression dans cette chambre demeure sensiblement constante quel que soit son volume et permette donc à l'utilisateur de lever et d'abaisser sans effort l'outil de préhension 5 en charge équilibré.

La chambre inférieure 27 est à l'échappement par l'ouverture 31 .

L'actionnement du vérin 22 est commandé par un organe de commande disposé sur l'outil de préhension 5 et agissant sur un distributeur d'alimentation 29 placé sur le circuit pneumatique du vérin 22, entre le vérin et la capacité tampon 26. Cet organe de commande peut être lui aussi un distributeur d'alimentation 28, placé sur un circuit de commande pneumatique, et actionnable par un bouton poussoir 30.

Le fonctionnement du dispositif de manutention qui vient d'être décrit est le suivant. Des bouteilles étant fournies par un convoyeur (non représenté) au convoyeur 1, celles-ci sont acheminées debout, en file, vers la zone de chargement 4. Avant de pénétrer sur la zone de chargement 4, elles sont comptées par le mécanisme de comptage 3 qui bloque la progression des bouteilles situées en amont de cette zone lorsqu'il a compté un nombre prédéterminé de bouteilles, égal au nombre des ventouses 15 de l'outil de préhension. Sur la zone de chargement, la progression des bouteilles est arrêtée par une butée (non représentée) située au niveau de l'extrémité du dosseret 6. L'utilisateur amène alors l'outil de préhension 5 à vide, qui est équilibré par le seul contrepoids 20, en appui sur la tablette 7 en le faisant pivoter de façon que la face active des ventouses 15 soit en regard des bouteilles. Il pousse l'outil 5 au contact des bouteilles de façon à faire coïncider chaque ventouse 15 avec une bouteille et il commande la mise en service du générateur de vide, ce qui a pour effet de fixer les bouteilles, par succion, à l'outil de préhension 5. L'outil ainsi chargé n'étant plus équilibré, l'utilisateur commande, en pressant sur le poussoir 30, l'alimentation de la chambre 24 du vérin 22 à une pression déterminée par la force d'équilibrage à fournir (qui dépend du nombre et du type des bouteilles manipulées). La mise en pression du vérin étant très rapide, le dispositif 5 en charge est soumis à une brusque traction vers le haut qui s'annule dès que les bouteilles ont décollé du tronçon 1a du convoyeur 1, le dispositif en charge étant alors équilibré. Dans le même temps, l'outil pivote du fait du déport du centre de gravité de la charge par rapport au point de suspension de l'outil à la sangle. Pour utiliser cette traction, en contrôlant aisément le pivotement, l'utilisateur du dispositif se sert du dosseret 6 de la façon qui est illustrée sur les figures 3a à 3c . Sur la figure 3a, l'outil 5 chargé n'est pas équilibré, il est en appui sur le tronçon 1a du convoyeur 1, les bouteilles debout étant en contact du dosseret 6. Celui-ci est recouvert d'une couche 33 d'un matériau élastique à fort coefficient de frottement tel que du caoutchouc mousse pour favoriser l'adhérence des bouteilles sur le dosseret et les protéger. Sur la figure 3b l'utilisateur a commandé l'actionnement du vérin 22, il applique les bouteilles en les enroulant sur le dosseret 6 tandis que l'outil 5 est tiré vers le haut et pivote autour de son axe longitudinal, puisqu'il subit un effort plus grand que l'effet de la charge, en partie supportée par le dosseret. Sur la figure 3c, l'outil de préhension est en fin de son mouvement de pivotement, il est équilibré par l'action conjointe du contrepoids 20 et du vérin 22, les bouteilles sont couchées.

Dans cette position d'équilibre, l'utilisateur soulève et abaisse sans effort l'outil chargé pour le déplacer par exemple de la zone de chargement 4 à une caisse 32 jouxtant la potence 8 à l'opposé du tronçon de convoyeur 1. Pour déposer les bouteilles dans la caisse, l'utilisateur descend l'outil de préhension 5 dans la caisse et pose les bouteilles à l'endroit choisi. Il commande la purge du vérin 22 puis la mise hors service du générateur de vide. L'outil de préhension libère les bouteilles et reste sur place, en position d'équilibre sous l'action du seul contrepoids 22.

Pour décharger des bouteilles saisies au moyen de l'organe de préhension 5 sur une table équipée d'un dosseret 6, on effectue en sens inverse la manipulation décrite en relation aux figures 3a à 3c, c'est-à-dire qu'on pose d'abord le col des bouteilles couchées sur le sommet du dosseret 6 (figure 3c), l'outil 5 étant équilibré, puis on commande la purge du vérin 22. L'outil de préhension en charge déséquilibré amorce un mouvement de descente que l'on contrôle en redressant les bouteilles en appui sur le dosseret et en faisant pivoter l'outil (figures 3b,3c)

L'invention n'est pas limitée au mode de réalisation qui vient d'être décrit et elle est susceptible de variantes de réalisation. En particulier, le contrepoids 20 pourrait être remplacé par un vérin qui serait toujours sous pression et servirait à équilibrer l'outil de préhension 5 à vide.

**Revendications**

1. Dispositif de manutention de bouteilles comprenant un outil de préhension (5) latérale de bouteilles, articulé à une extrémité d'un lien souple (17) ayant son autre extrémité attelée à des moyens d'équilibrage (20,22) de l'outil de préhension (5) développant un effort d'équilibrage ajustable à deux valeurs selon que l'outil est à vide et en charge, et une table de support (1a) pour une pluralité de bouteilles disposées debout en file, caractérisé en ce qu'il comporte un dosseret (6) monté le long de la table (1a) avec sa convexité tournée vers la table (1a) pour accompagner le basculement des bouteilles lors de la modification de la valeur de l'effort d'équilibrage.

2. Dispositif selon la revendication 1 caractérisé en ce qu'il comprend, le long de la table (1a), une tablette d'appui (7) de hauteur réglable pour poser l'outil de préhension (5).

3. Dispositif selon une des revendications 1 ou 2, caractérisé en ce que la table est constituée par un tronçon terminal (1a) de convoyeur (1) de bouteilles.

4. Dispositif selon la revendication 3, caractérisé en ce qu'il comprend un mécanisme de comptage (3) pour commander l'admission d'un nombre déterminé de bouteilles sur la table (1a) associé à une butée (3a) escamotable de retenue de la partie de la file de bouteilles située sur le convoyeur en amont de son extrémité formant la table (1a).

5. Dispositif selon l'une des revendications précédentes, caractérisé en ce que les moyens d'équilibrage comportent un vérin (22) qui constitue un ressort à gaz d'équilibrage de la charge dont la chambre (24) est alimentée ou purgée au moyen d'une vanne (29) pilotée par des moyens de commande (28, 30) disposés sur l'outil de préhension (5).

6. Dispositif selon la revendication 5, caractérisé en ce que les moyens d'équilibrage (22) comprennent un contrepoids (20) de masse fixe pour équilibrer l'outil de préhension (5) à vide, couplé au piston (23) du vérin pneumatique (22).

7. Dispositif selon une des revendications 5 et 6, caractérisé en ce que le vérin est un vérin sans tige (22).

*Fig:1*

*Fig:3*

*Fig. 2*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 040 154  (THIERION) <br> * En entier * <br> --- | 1 | B 65 B  21/02 <br> B 65 G  47/91 <br> B 65 G  61/00 |
| A | FR-A-1 437 193  (SCHOELLKOPF) <br> * En entier * <br> ----- | 1 | |

DOMAINES TECHNIQUES
RECHERCHES (Int. Cl.5)

B 65 G
B 65 B
B 66 C

Le présent rapport a été établi pour toutes les revendications

| Lieu de la recherche | Date d'achèvement de la recherche | Examinateur |
|---|---|---|
| LA HAYE | 13-06-1990 | OSTYN T.J.M. |

EPO FORM 1503 03.82 (P0402)